# EUROPEAN PATENT SPECIFICATION

(11) **EP 0 788 676 B1**
(45) Date of publication and mention of the grant of the patent: **23.12.1998**
(21) Application number: 95935457.2
(22) Date of filing: 17.10.1995
(51) Int. Cl.: H02G 3/14

(54) **A MODULAR STRUCTURE FOR THE WALL-MOUNTING OF ELECTRICAL EQUIPMENT**
MODULARSTRUKTUR ZUR WAND MONTAGE EINES ELEKTRISCHEN GERÄTES
STRUCTURE MODULAIRE DESTINEE AU MONTAGE MURAL D'UN MATERIEL ELECTRIQUE

(30) Priority: 25.10.1994 IT MI942183
(43) Date of publication of application: 13.08.1997
(73) Proprietor: BTICINO S.P.A., 20154 Milano (IT)
(72) Inventor: CALDERARA, Ennio, I-21050 Cuasso al Piano (IT)
(74) Representative: Maggioni, Claudio
(86) International application number: EP9504085
(87) International publication number: WO9613088

(56) References cited:
- EP-A- 0 341 805
- CA-A- 968 882
- DE-A- 4 001 478
- US-A- 4 780 573
- US-A- 5 153 816

## Description

The present invention relates to a modular structure for the wall-mounting of electrical equipment, as defined in the preamble of claim 1 and known from US-A-4 780 573 and CA-A-968 882.

Before continuing with this description, it should be pointed out that in it, and in the claims which follow, the term electrical equipment is intended generally to mean components which are included in electrical installations of civil buildings and the like, and which are usually fitted to the walls of rooms. This definition therefore includes ordinary switches for turning lights on and off, electrical sockets, control buttons, keyboards and knobs for the most diverse applications such as, for example, ordinary bells or thermostats or timers, light-emitting or acoustic signallers for alarm systems and the like, fuses, sockets for television aerials or connectors for coaxial cables and any other items which might be included in the aforesaid systems.

As is known, much of the equipment mentioned is nowadays fitted into corresponding modular structures of the type mentioned above; this modular nature is in fact designed to enable different types of equipment to be fitted interchangeably into identical structures, thus enabling coordinated products lines to be manufactured and leading to considerable financial savings and rationalisation in both manufacturing and marketing.

If we consider, for example, the switches which are commonly fitted in our houses, these usually have a frame for fixing to the wall, similar to those used for electrical sockets; in fact these frames are generally manufactured to standard shapes and dimensions so that their seats can house a switch button or the contacts of a socket interchangeably.

In switch or socket structures of this type and, more generally, in structures for all the other applications mentioned above, the cover is provided not only to protect the equipment but also to fulfil aesthetic requirements since these cannot usually be fulfilled by the supporting frame which has a functional nature.

More particularly, it is known to manufacture the covers in various colours or designs to facilitate the adaptation of the equipments to the environment in which they are to be fitted, thereby satisfying customer requirements; this, however, means that manufacturers have to take measures to enable them to manufacture series of modular structures which are able to satisfy the requirements of ever more demanding customers.

It is clear from a manufacturing point of view that covers of different colours and/or designs involve manufacturing complications and mean that, in order to provide a wide choice of readily available models, manufacturers have to handle complicated production programmes and stock management.

However, it must be pointed out that current manufacturing techniques are not able to cope in a satisfactory manner with market requirements whereby, in practice, a compromise has to be found which limits the range of covers available to as to avoid an unacceptable increase in production costs.

It is therefore clear that the manufacturing requirements for the modular structures described above work against marketing exigences: on the one hand, to simplify production, reduce costs and simplify stock management, it would be best to avoid excessive choice of covers while, on the other hand, in the interests of marketing, it would be useful to have a very great variety of colours and designs available, even to the extent of being able to provide personalised modular structures with plates of colours selected by clients.

The object of the invention is to reconcile these opposing requirements; in other words, the invention aims to provide a modular structure for the wall-mounting of electrical equipment, having characteristics enabling it to be manufactured in a very wide range of designs while overcoming the drawbacks of the prior art.

This object is achieved by a structure as defined in the first of the claims which follow.

Further characteristics, the use and advantages of the invention will become apparent from the description of one embodiment provided hereafter purely by way of non-limitative example, with reference to the appended drawings. In these drawings:
Figure 1 is a partially-sectioned perspective view of a structure according to the invention mounted on a wall;
Figure 2 is an exploded view of the structure of Figure 1;
Figure 3 is a sectioned side view of the structure of the preceding drawings.

With reference to these drawings, a structure according to the invention is generally indicated 1; an item of electrical equipment C, in this case a switch, is fitted in this structure and is shown in broken outline.

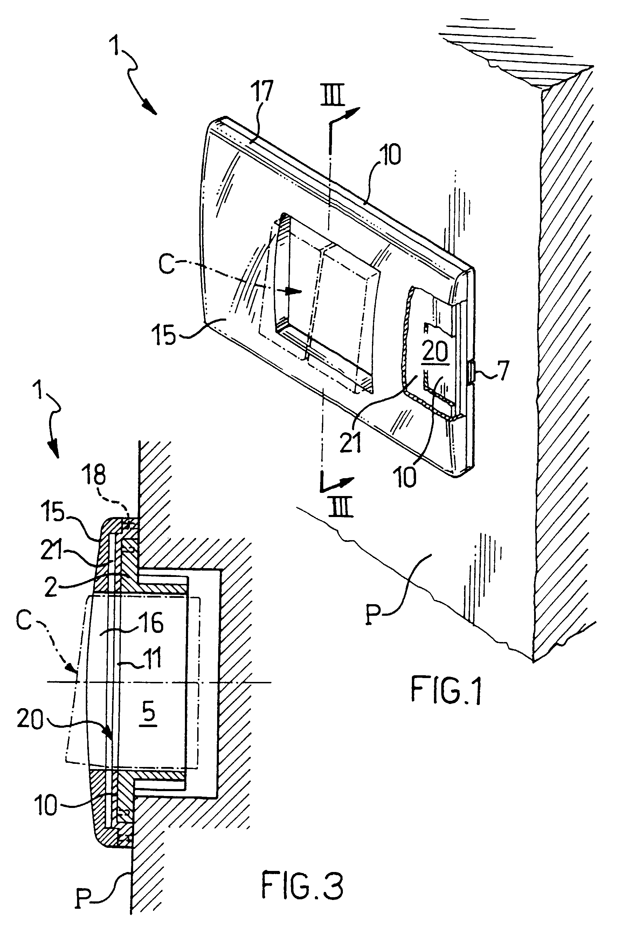

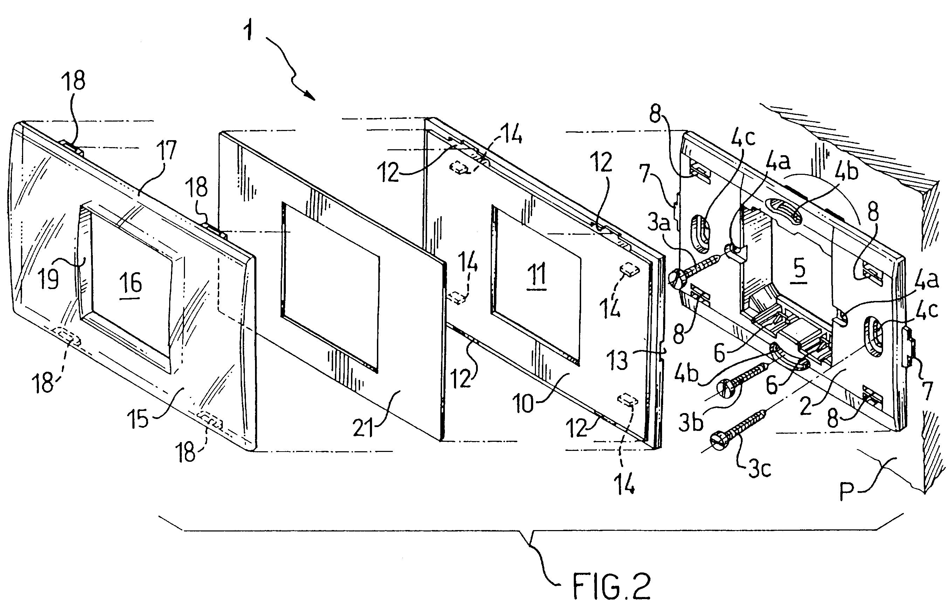

The structure 1 includes a supporting frame 2 set into a wall P and fixed by means of screws 3 (Figure 2 shows only three screws 3a, 3b and 3c) which pass through corresponding holes 4 (4a, 4b, 4c) formed in the frame 2; in particular, the screws 3 are of the type which also act on the spreader elements (commonly known as clips) not shown in the drawings. There is also a seat 5 in the frame 2 for housing the electrical equipment C, which seat has appropriate means 6 for fixing this equipment. In addition, two appendixes 7 extend from opposite sides of the frame 2 while in the front the frame has four centering slots 8 arranged near its corners; the appendixes are provided for snap engaging a base plate 10 with a central opening 11 corresponding with the frame seat 5 mentioned above. At its top and bottom, the plate 10 has two pairs of recesses 12 for the attachment of a cover plate 15 for the structure while, at its sides, it has notches 13 for centering and removing it by means of a tool (for example the tip of a screwdriver); in addition, on the side facing the frame, the plate 10 has projections 14 which can be associated with the slots 8 so that it may be correctly positioned, adjusted and fixed to the frame.

The cover plate is made of transparent material, preferably plastics, and also has a central aperture 16 corresponding to the seat 5 and therefore the equipment housed therein; in addition, the cover plate 15 has a turned or raised edge 17 around its periphery with fixing projections 18 for engagement with the recesses 12 mentioned above. The aperture 16 in the cover plate 15 also has a raised edge 19 (not shown in Figure 3) matching that of the cover; these raised edges enable the cover plate to be fitted over the rest of the structure so as to protect it and seal it as better explained below.

In the structure of the invention, the cover plate 15 is spaced from the base plate 10 so as to define a space 20 housing a background element 21 for decorating or personalising the cover, that is an element constituted by a piece of card or wallpaper or of plastics film, reminiscent in its shape and function of the mounts used for pictures and which may be made in a chosen design according to the application of the structure of the invention.

It can be seen from the above description that the structure of the invention can be adapted to the rooms in which it is to be fitted in a simple yet highly satisfactory manner. Indeed, it should be remembered that the background element 21 can be made on site by the person mounting the equipment, according to the wall on which the structure is to be mounted; since the background element 21 is visible through the transparent cover plate 15, the aesthetic effect which is achieved is that of a modular structure with a cover of the colour of the chosen background element 21.

As far as the aspects of cost differentiation referred to previously are concerned, it should be noted that the structure of the invention achieves the established object by enabling the contrasting requirements analysed previously to be fully satisfied; in fact, as the element 21 may be coloured or chosen at the site where the equipment is to be mounted, this manufacturing step, that is the colouring of a part of the modular structure, can be eliminated from the production cycle, thus saving resources. This result is achieved while ensuring at the same time that the structure is adaptable to a great variety of rooms; in fact, the element 21 may be coloured at its place of assembly or constituted by a simple piece of wallpaper, card or other material bearing the design chosen by the user, thus enabling the structure to be personalised.

This is not all: the same user will also be able to replace the element 21 extremely simply whenever he chooses.

Consider, for example, a case in which the walls of a room are painted a new colour, making it necessary to adapt plugs, sockets, switches and other electrical equipment to this new situation. Since the structure of the invention enables the snap-engaged transparent cover to be removed very easily and the frame element to be replaced by another chosen for the occasion, this aspect of the invention provides a clear advantage.

It should also be noted that the modular structure offers considerable external safety and protection, an aspect which is of considerable importance having regard to the rigorous standards in force in the field of electrical equipment.

Thanks to the turned edges 17 and 19 mentioned above, the space 20 housing the element 21 is closed and protected, preventing any dust or other matter infiltrating from outside; in addition, the base plate 10 separates the background element 21 from the supporting frame, thus protecting the latter whenever the cover plate 15 is removed, for example for replacement of the decorative element 21.

Another important contribution of the base plate 10 is that of providing an advantageous smooth support surface for the background element, thereby ensuring that the latter is correctly positioned relative to the transparent cover; but the main function of the base plate 10 is to act as an adaptor, enabling the decorative background element and the transparent cover to be applied on supporting frames on which also ordinary covers may be fitted instead of the transparent one.

In order to gain a clearer understanding of this aspect, it should be remembered that, in the coordinated products lines referred to above, the supporting frames are designed to house various items of equipment interchangeably and to couple with covers which will differ slightly in dependence on the equipment they are associated with.

To this end, as well as to enable them to be wall-mounted as illustrated in the example provided, the supporting frames generally have means such as holes for screws, ribs or appendixes for the snap-engagement of the various parts to be assembled on their front faces and the positioning of these means prevents the decorative frame element from being applied correctly, directly to the frame itself. The inclusion of the base plate 10 resolves this problem as it constitutes a smooth, regular support surface, without the need to modify the frame, onto which it may be fitted by the means already provided.

In other words, therefore, it is possible to form the modular structure of the invention by using an ordinary supporting frame such as would be used in other common applications, thanks to the base plate 10 which enables the transparent cover to be fitted easily to this frame.

## Claims

1. A modular structure for the wall-mounting of electrical equipment, including a supporting frame (2) for fixing to a wall and having a seat (5) for receiving the equipment, a cover plate (15) removably applied on the frame and provided with at least one aperture (16) for access to the equipment and a base plate (10) removably fixed to the supporting frame (2) and on which the cover plate (15) is applied, wherein the cover plate (15) is transparent and is applied so as to be spaced from the front of the supporting frame (2) so as to define a space (20) between the former and the latter for housing a background element (21) and wherein the background element (21) is interposed between the cover plate (15) and the base plate (10).
characterised in that the cover plate (15) and its aperture (16) have respective raised edges (17, 19) whereby the space (20) housing the background element (21) is substantially closed.

2. A structure according to Claim 1, characterised in that the cover plate (15) is snap mounted on the base plate (10).

## Patentansprüche

1. Eine Modularstruktur für die Wandbefestigung einer elektrischen Ausrüstung, wobei dieselbe einen Tragerahmen (2) zum Befestigen an einer Wand aufweist, und wobei dieselbe einen Sitz (5) zum Aufnehmen der Ausrüstung, eine Abdeckplatte (15), die entfernbar an dem Rahmen angebracht ist und mit mindestens einer Öffnung (16) für einen Zugriff zu der Ausrüstung versehen ist, und eine Basisplatte (10) aufweist, die entfernbar an dem Tragerahmen (2) befestigt ist und an der die Abdeckplatte (15) angebracht ist, wobei die Abdeckplatte (15) transparent ist und derart angebracht ist, daß dieselbe von der Vorderseite des Tragerahmens (2) beabstandet ist, um einen Raum (20) zwischen der ersteren und dem letzteren zum Unterbringen eines Hintergrundelements (21) zu definieren, und wobei das Hintergrundelement (21) zwischen der Abdeckplatte (15) und der Basisplatte (10) positioniert ist,
dadurch gekennzeichnet, daß die Abdeckplatte (15) und die Öffnung (16) derselben jeweilige erhabene Kanten (17, 19) aufweisen, wodurch der Raum (20), der das Hintergrundelement (21) unterbringt, im wesentlichen geschlossen ist.

2. Eine Struktur gemäß Anspruch 1, dadurch gekennzeichnet, daß die Abdeckplatte (15) an der Basisplatte (10) schnappbefestigt wird.

## Revendications

1. Structure modulaire destinée au montage sur un mur d'un équipement électrique, comprenant un corps de support (2) destiné à être fixé à un mur et comprenant un siège (5) de logement de l'équipement, une plaque de couverture (15) placée de manière amovible sur le corps et comportant au moins un trou (16) d'accès à l'équipement, ainsi qu'une plaque de base (10) fixée de manière amovible au corps de support (2) et sur laquelle la plaque de couverture (15) est placée, la plaque de couverture (15) étant transparente et étant placée de manière à être distante de l'avant du corps de support (2) de manière à délimiter un espace (20) entre la première et ce dernier pour loger un élément de fond (21) et l'élément de fond (21) étant interposé entre la plaque de couverture (15) et la plaque de base (10),
caractérisée en ce que la plaque de couverture (15) et son trou (16) comportent des rebords respectifs saillants (17, 19) de manière que l'espace (20) logeant l'élément de fond (21) soit sensiblement fermé.

2. Structure selon la revendication 1, caractérisée en ce que la plaque de couverture (15) est montée par enclenchement sur la plaque de base (10).
